# EUROPEAN PATENT SPECIFICATION

(11) **EP 2 263 838 B1**
(45) Date of publication and mention of the grant of the patent: **24.04.2013**
(21) Application number: 09722695.5
(22) Date of filing: 18.03.2009
(51) Int. Cl.: B25J 15/02, B25J 9/06

(54) **CLAMP DEVICE AND TRANSFER ROBOT**
KLEMMVORRICHTUNG UND TRANSFERROBOTER
DISPOSITIF DE SERRAGE ET ROBOT DE TRANSFERT

(30) Priority: 21.03.2008 JP 2008073833
(43) Date of publication of application: 22.12.2010
(73) Proprietor: TOYOTA JIDOSHA KABUSHIKI KAISHA, Toyota-shi, Aichi-ken, 471-8571 (JP)
(72) Inventor: AOKI, Sota, Toyota-shi Aichi 471-8571 (JP); TOMIDA, Koji, Toyota-shi Aichi 471-8571 (JP); TOHYAMA, Shinji, Toyota-shi Aichi 471-8571 (JP)
(74) Representative: Smith, Samuel Leonard
(86) International application number: PCT/JP2009/055291
(87) International publication number: WO 2009/116574

(56) References cited:
- JP-A- 5 301 186
- JP-A- 6 143 162
- JP-A- 8 039 461
- JP-A- 10 238 699
- JP-A- 11 033 949
- JP-A- 60 062 489
- JP-A- 2004 216 491
- JP-A- 2005 131 715
- JP-A- 2006 167 864

## Description

### Technical Field

The present invention relates to a clamping device and a transfer robot to transfer an object to be carried such as a wheeled platform.

### Background Art

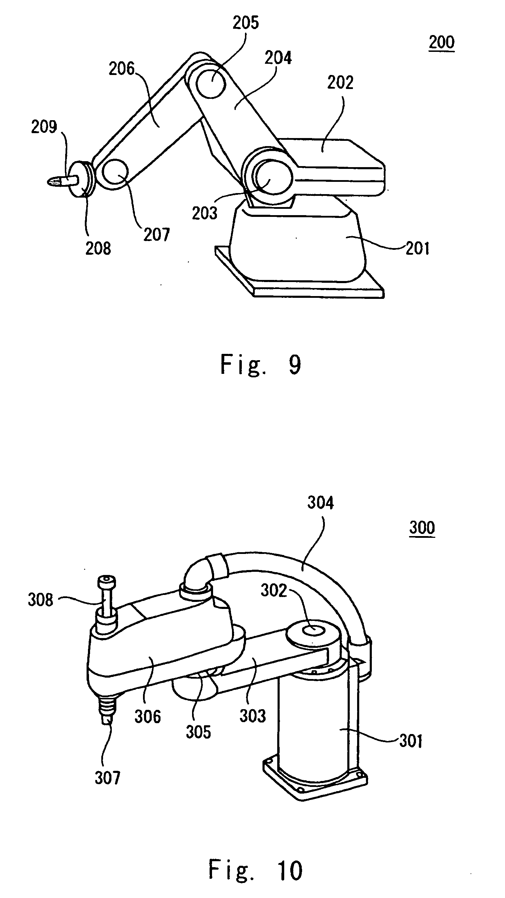

Figs. 9 and 10 show related transfer robots. In particular, Figs. 9 and 10 show a vertical multi-joint type robot and a horizontal multi-joint type robot respectively. The vertical multi-joint type robot 200 includes a foundation 201 grounded on a floor surface, a support portion 202 attached on the foundation 201 through a link mechanism (not shown), a first arm 204 attached to the support portion 202 by a link mechanism 203 in such a manner that the first arm 204 can rotate in a vertical direction, a second arm 206 attached to the first arm 204 by a link mechanism 205 in such a manner that the second arm 205 can rotate in a vertical direction, a hold portion 208 attached to the second arm 206 by a link mechanism 207 in such a manner that the hold portion 206 can rotate in a vertical direction, and a pin 209 attached to the hold portion 208. The first arm 204, the second arm 206, and the hold portion 208 are vertically moved by rotating the link mechanisms 203, 205 and 207. Further, the support portion 202 moves horizontally by the link mechanism disposed between the foundation 201 and the support portion 202.

Meanwhile, the horizontal multi-joint type robot 300 includes a foundation 301 grounded on a floor surface, a link mechanism 302 attached on the foundation 301, a first arm 303 attached by the link mechanism 302 in such a manner that the first arm 303 can rotate in a horizontal direction, a second arm 306 attached to the first arm 303 by the link mechanism 305 in such a manner that the second arm 306 can rotate in a horizontal direction, a hose 304 containing electrical wires connected to the second arm 306, and a cylinder 307 that is provided in the second arm 306 and moves vertically. The first arm 303 and the second arm 306 move horizontally by rotating the link mechanisms 302 and 305. An example of a publicly-known transfer robot that horizontally carries an object to be carried like the one described above is a transfer robot disclosed in Patent document 1.

Note that in such transfer robots, following methods can be conceivable as a related clamping mechanism used to carry a heavy object. 1) A method in which a hand pin is inserted into and fixed in a clamp hole provided in a wheeled platform. 2) A method in which a clamp portion (such as a bar) provided in a wheeled platform is sandwiched and fixed by a hand(s).
[Patent Document 1]
   Japanese Utility Model Registration No. 3115497
JP 05 301186 aims to provide a coupler for automatic tool replacement which has a compact size, a large loading capacity, and a smooth connecting/disconnection function, and can avoid the driving of a robot arm in an imperfect connecting condition. The first unit is composed of a thick plate from main body and a hanging part projecting doward from the main body, a vertical cylinder is composed by providing a piston movable up and down, and an output shaft is provided at the lower side of the piston. While eccentric rotation plates are provided on both sides of the output shaft of the hanging part, a linear movement/rotating movement converting mechanism to rotate the eccentric rotation plates following the up and down movement of the output shaft is placed, eccentric rotation plates are rotated to the engaging position or to the engagement releasing position with the second unit, and thereby, the first unit and the second unit are connected or separated. The detector of the first sensor is faced to detect the eccentric rotation plates at the engaging position, while the detector of the second sensor is faced to the position to detect the piston when the eccentric rotation plates are at the engagement releasing position.
JP 60 062489 describes a coupling mechanism with a pair of pivotable arms which pivot outwardly from one another so as to engage in inwardly facing recesses of a part to be coupled.
JP 06 143162 aims to perform stable support of a working table by deeply inserting a working table for a work, such as welding and painting, even when a box type block is provided with a narrow part. An elevatable and horizontally telescopic beam is arranged to a revolving table revolvable around a vertical axis through parallel link arms. A working table is disposed to an arm revolving table, arranged rotatably around the vertical axis to the tip part of the horizontally telescopic horizontal beams, through a vertically rotatable rotary arm. First and second support legs to downward rotatably support the horizontally telescopic beam to the tip side of the horizontal beam are arranged containably in the horizontally telescopic beam.

### Disclosure of Invention

### Technical Problem

However, following problems arise when the above-described method is employed in a situation where variations in manufacturing accuracy/stop accuracy or the like of the wheeled platform are large. In the case of 1), a pin of a hand is inserted into a clamp hole of a wheeled platform or the like in a straight movement. However, the tip of the pin is tapered so that the variations are absorbed. Therefore, to increase the tolerable variations, it is necessary to increase the guiding of the clamp hole of the wheeled platform or the like. Further, errors in the stop position can be absorbed by increasing the guiding taper of the clamp hole. However, since both the pin and the hole become larger, it is very difficult to establish them when the available space is limited. Alternatively, it is necessary to provide an additional external positioning mechanism to improve the stop accuracy.

In the case of 2), the stroke of the clamp hand becomes larger. Therefore, when the safety needs to be taken into consideration, it is necessary to reduce the thrust or to attach a cover. However, a heavy object cannot be fixed with the reduced thrust. Further, if a cover is attached, the hand portion becomes larger. Therefore, it is very difficult to establish it when the available space is limited.

Since the wheeled platform or the like coexists with a worker(s) and is carried by the worker or on a conveyer having no positioning means, the stop position accuracy at the clamping position is poor. Further, if a positioning mechanism such as a conveyer is further added, the costs would become very high because a safety measure needs to be taken for the worker who coexists with the wheeled platform or the like. Therefore, the clamping has to be performed in a poor positioning accuracy state.

The present invention has been made to solve a problem like this, and an object thereof is to provide a clamping device capable of clamping an object even when the variations are large, and a wheeled platform.

### Technical Solution

To achieve the above-described object, there is provided a clamping device as defined in appended claim 1.

In the present invention, the actuator moves straight and the clamp portions thereby clamp the portion to be clamped from the inside, so that the portion to be clamped can be joined to the wheeled platform or the like. With the rotational mechanism of the clamp portions, it is possible to absorb large variations in the wheeled platform position and large variations in the hand portion position of the device on the transferring side without requiring a large space.

A transfer robot in accordance with the present invention is defined in appended claim 2.

In the present invention, the caster(s) is further attached on the lower surface of the first arm to support the weight of the robot itself. In addition, an object to be carried is carried by turning the arm in a horizontal direction by the link mechanism. As a result, it is possible to use a low-power motor.

### Advantageous Effects

In accordance with the present invention, a clamping device capable of clamping an object even when variations are large, and a wheeled platform can be provided.

### Brief Description of Drawings

Fig. 1 shows a clamping device in accordance with an exemplary embodiment of the present invention;
Fig. 2 shows an aspect of an action of a clamping device before the clamping;
Fig. 3 shows an aspect of an action of a clamping device after the clamping;
Fig. 4 shows a transfer robot to which a clamping device in accordance with an exemplary embodiment of the present invention is attached;
Fig. 5 shows, similarly, a transfer robot to which a clamping device in accordance with an exemplary embodiment of the present invention is attached;
Fig. 6 shows, similarly, a transfer robot to which a clamping device in accordance with an exemplary embodiment of the present invention is attached;
Fig. 7 shows, similarly, a transfer robot to which a clamping device in accordance with an exemplary embodiment of the present invention is attached;
Fig. 8 shows, similarly, a transfer robot to which a clamping device in accordance with an exemplary embodiment of the present invention is attached;
Fig. 9 shows a related vertical multi-joint type robot; and
Fig. 10 shows a related horizontal multi-joint type robot.

### Explanation of Reference

| | |
|---|---|
| 1 | ACTUATOR |
| 2 | LINK |
| 3 | CLAMP PORTION |
| 3a | CLAMP NAIL |
| 4 | COVER |
| 6 | FULCRUM |
| 7 | PIN |
| 8 | PORTION TO BE CLAMPED |
| 10 | CLAMPING DEVICE |
| 11 | BASE PORTION |
| 12a, 12b | LINK PORTION |
| 13 | FRONT-END LINK PORTION |
| 15a, 15b, 15c, 15d | MOTOR |
| 16a, 16b, 16c, 16d | SPEED REDUCTION MECHANISM |
| 17 | FOUNDATION |
| 18b, 18c, 18d, 18e | SPEED REDUCTION MECHANISM |
| 19b, 19c, 19d | ARM |
| 20b, 20c, 20d | CASTER |
| 31 | WHEELED PLATFORM |
| 32 | CASTER |
| 33 | CLAMP BAR |
| 100 | TRANSFER ROBOT |

### Best Mode for Carrying Out the Invention

Specific exemplary embodiments to which the present invention is applied are explained hereinafter with reference to the drawings. In these exemplary embodiments, the present invention is applied to a clamping device and a transfer robot to transfer an object to be carried such as a wheeled platform.

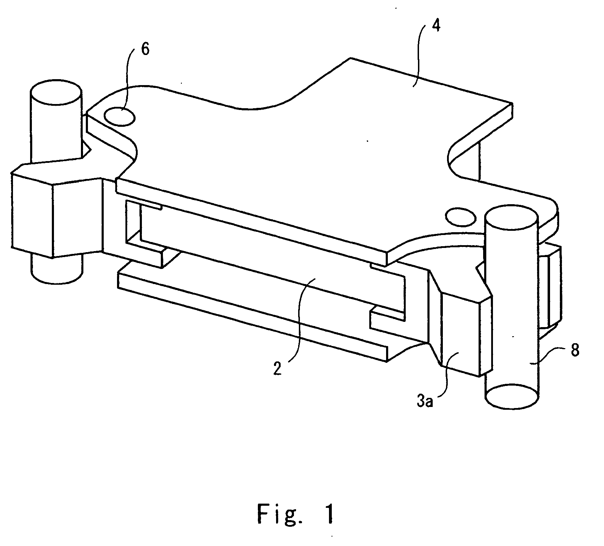

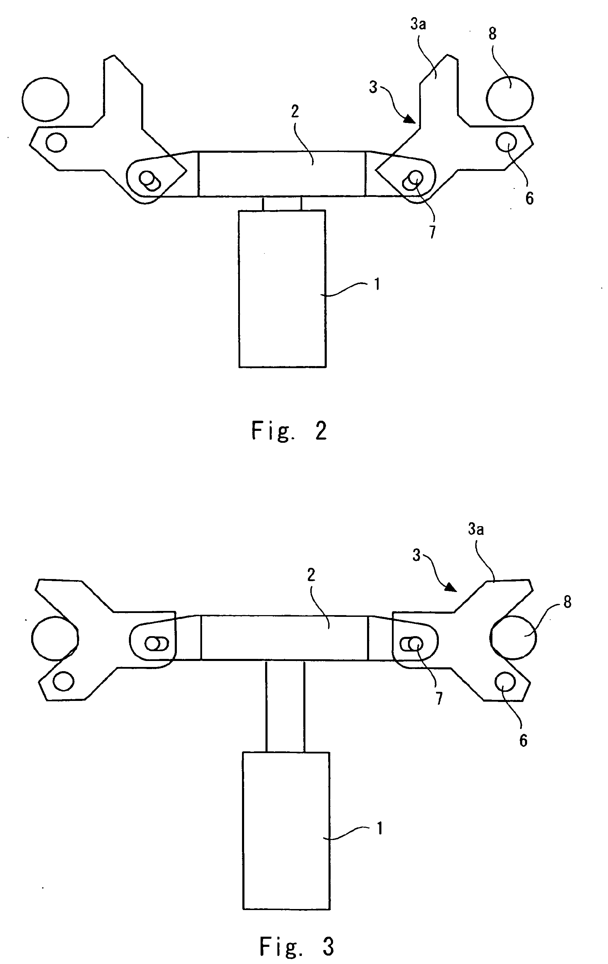

Figs. 1 and 2 show a clamping device in accordance with this exemplary embodiment. The clamping device 10 is provided at an end of a transfer robot, which is described later, and used to join to a wheeled platform. The clamping device 10 includes an actuator 1 that moves straight, a link 2 that extends in a direction perpendicular to the straight movement direction of the actuator 1, clamp portions 3 attached to the both ends of the link 2, and a cover 4. Each of the clamp portions 3 includes a clamp nail 3a that clamps a portion to be clamped 8. The actuator 1 moves straight and the clamp portion 3 rotate so that the portion to be clamped 8 is clamped.

For example, two clamp bars (portion to be clamped) are provided in the wheeled platform or the like, and the clamp portions 3 of the clamping device hold and grasp these two clamp bars from the inside. It is possible to absorb large variations in the wheeled platform position and large variations in the hand position on the moving device side before the clamping.

Further, the actuator 1 in accordance with this exemplary embodiment may be a low-power actuator (e.g., 80 W or lower). The actuator 1 is fixed on the cover 4. Further, the link 2 is provided at the tip of the actuator 1. Furthermore, in each of the clamp portions 3, the clamp nail 3a is attached to the cover 4 in such a manner that the clamp nail 3a can rotate on a fulcrum 6. The clamp nail 3a is connected to a pin 7 fixed to the link 2 through an oblong hole. The oblong hole portion, which serves as the connection point between the link 2 and the clamp portion 3, acts as the point of effort. Further, the connection point between the portion to be clamped 8 and the clamp portion 3 acts as the point of action.

In this exemplary embodiment, the lateral force is relieved to the link 2 by rotating the clamp nail 3a, so that the load exerted on the actuator 1 can be reduced, thus enabling the thrust to be reduced. Various forces that would be exerted so that the clamping is disengaged including friction between the wheels of the wheeled platform and the floor surface and an inertial force during acceleration are exerted while the object is being carried. Therefore, the actuator 1 of the clamp portion needs to exert a force capable of coping with those forces.

Note that the clamping device 10 in accordance with this exemplary embodiment uses a rotational movement mechanism, and uses the straight-movement end (7) as the point of effort. Further, the clamp portions 3 are provided in such a manner that the clamp portions 3 can rotate on the fulcrums 6. As a result, it is possible to reduce the thrust of the actuator 1.

Further, by using the mechanism (pin or hand) that directly clamps an object with a straight movement, the required space is reduced. With the method in which one of the tapered clamp nails is used as the rotation center and clamping is performed by the rotational movement of the clamp nail with the straight-movement actuator, it is possible to clamp even a wheeled platform or the like having large position variations while making the hand perform positioning.

Figs. 2 and 3 show aspects of an action of a clamping device. In particular, Figs. 2 and 3 show aspects before and after clamping respectively. From the state shown in Fig. 2, the actuator 1 moves straight and the clamp portions 3 rotate by using the fulcrums 6 as references. As a result the portion to be clamped 8 can be clamped as shown in Fig. 3.

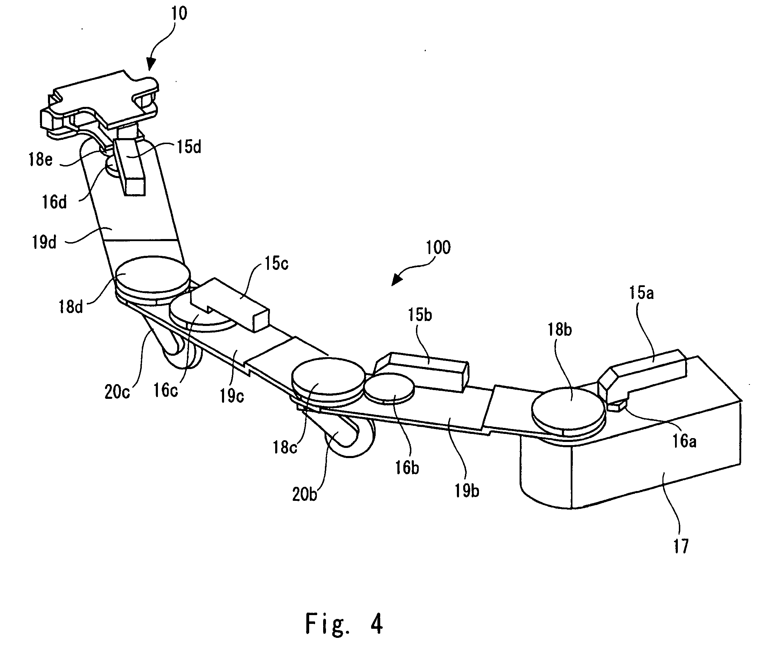

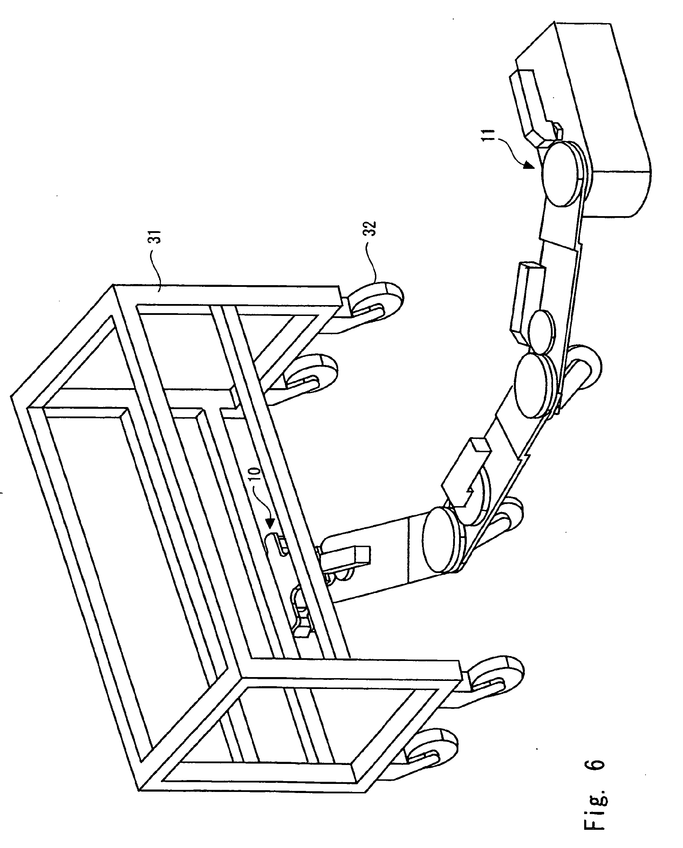

Figs. 4 to 8 show a transfer robot to which the above-described clamping device is attached. The transfer robot 100 includes a base portion 11, link portions 12a and 12b, a front-end link portion 13, and a clamping device 10. The base portion 11 is fixed on the floor surface, and a wheeled platform 31 is held by the clamping device 10 provided at the front-end link portion 13. Then, each of the link portions 12a and 12b and the front-end link portion 13 rotates in a horizontal direction, so that the wheeled platform 31 can be transferred in a horizontal direction.

The base portion 11 includes a motor 15a, a first speed reduction mechanism 16a that is attached to the tip of motor 15a and rotates on a vertical axis by the motor 15a, and a foundation 17 on which the first speed reduction mechanism 16a is attached. The transfer robot 100 in accordance with this exemplary embodiment is configured so as to perform only two-dimensional movements, so that the load on the motor 15a can be reduced. For example, a low-power motor of 80 W or lower can be used.

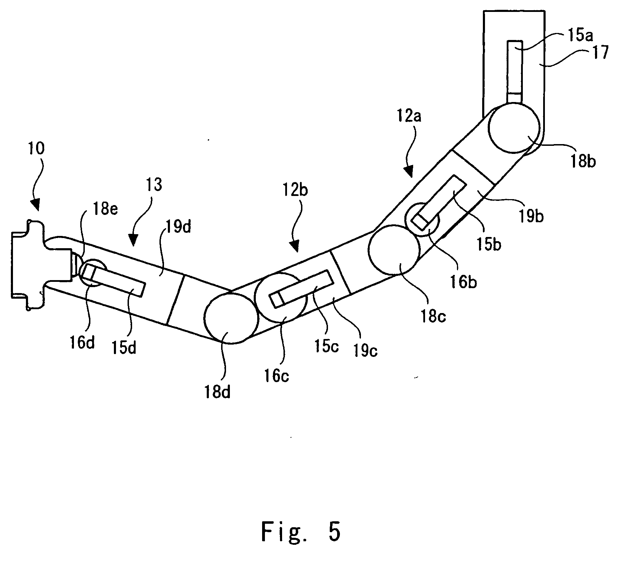

As shown in Fig. 5, the link portion 12a includes a second speed reduction mechanism 18b connected to the first speed reduction mechanism 16a of the base portion 11, an arm 19b that serves as a second arm, a motor 15b, a first speed reduction mechanism 16b that is rotated by the motor 15b, and a caster 20b that is attached on the lower surface of the arm 19b and supports and moves the arm 19b. The second speed reduction mechanism 18b is attached at one end of the upper surface of the arm 19b and the first speed reduction mechanism 16b is disposed at the other end of the arm 19b. Each of the first speed reduction mechanism and the second speed reduction mechanism is a mechanism to reduce the rotation speed of the motor, and constructed by a combination of a speed reducer, a gear box, a cogwheel(s), and the like. Similarly to the first speed reduction mechanism 16a, the second speed reduction mechanism 18b also rotates around a vertical axis in a horizontal direction. The motor 15a, the first speed reduction mechanism 16a, and the second speed reduction mechanism 18b constitute a link mechanism.

The first speed reduction mechanism 16a of the above-described base portion 11 is rotated by the motor 15a, and by this rotation, the second speed reduction mechanism 18b connected to the first speed reduction mechanism 16a is rotated. Note that the first speed reduction mechanism 16a and the second speed reduction mechanism 18b are configured in such a manner that their cogwheels mate with each other. The second arm 19b turns in a horizontal direction by rotating the second speed reduction mechanism 18b. The link portion 12b has a similar configuration as that of the link portion 12a.

The front-end link portion 13 includes a second speed reduction mechanism 18d, an arm 19d that serves as a first arm, a motor 15d, a first speed reduction mechanism 16d that is rotated by the motor 15d, and a caster 20d that is attached on the lower surface of the arm 19d and supports/moves the arm 19d. The second speed reduction mechanism 18b is attached at one end of the upper surface of the arm 19d. The front-end link portion 13 includes the clamping device 10 that connects to the first speed reduction mechanism 16d.

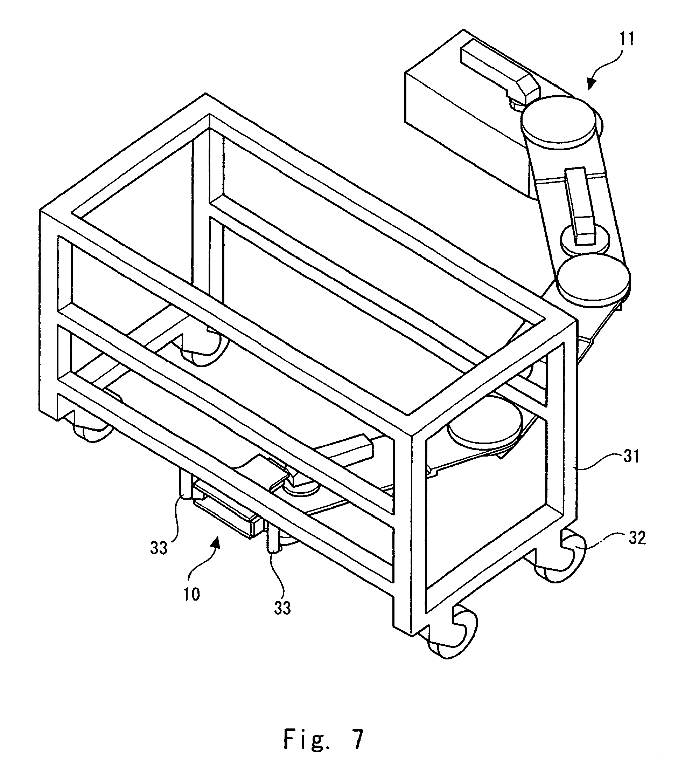

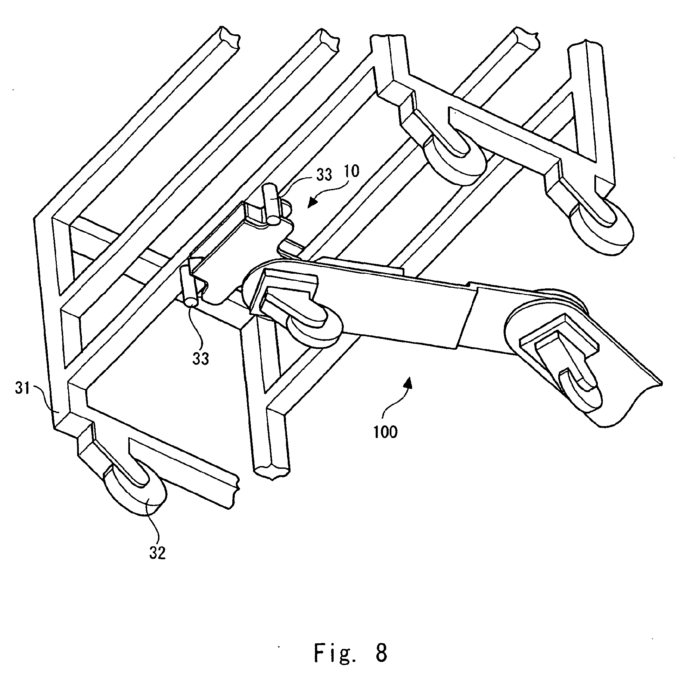

Further, as shown in Figs. 7 and 8, the clamp portions 3 of the clamping device 10 rotate in such a manner that they open from the inside toward the outside to clamp the clamp bars 33 attached to the wheeled platform 31, so that the wheeled platform 31 and the clamping device 10 are joined to each other. The clamping device 10 can easily join to the wheeled platform 31, which includes wheels 32, just by providing the wheeled platform 31 with the clamp bars 33.

In this exemplary embodiment, clamping can be performed in a small space. Therefore, by disposing a bar(s) having a circular shape in cross-section in the portion to be clamped of the wheeled platform or the like, the transfer robot that can coexist with a worker can be realized with the same mechanism regardless of the shape of the wheeled platform and/or the shape of the object to be carried.

Note that the present invention is not limited to the above-described exemplary embodiments, and needless to say, various modifications can be made within the limits that do not depart from the spirit of the present invention.

### Industrial Applicability

The present invention can be used in clamping devices and transfer robots to transfer an object to be carried such as a wheeled platform.

## Claims

1. A clamping device (10) for holding and grasping portions to be clamped from the inside, comprising:
a cover (4);
an actuator (1) fixed on the cover (4) that is configured to move straight;
a link (2) provided at a tip of the actuator (1) that extends in a direction perpendicular to a straight-movement direction of the actuator (1); and
respective clamp portions (3) rotatably attached at each end of the link (2), each clamp portion (3) comprising a respective pair of tapered clamp nail portions (3a) to clamp a portion (8) to be clamped, one of the tapered clamp nail portions (3a) of each pair being attached, towards a distal end, to the cover (4) in such a manner that it can rotate on a fulcrum (6) as a rotation centre for the respective clamp portion (3), the clamp portions (3) rotating on the respective fulcrums (6) using the respective fulcrums (6) as references;
wherein, when the actuator (1) moves straight, the clamp portions (3) rotate in such a manner that they open from the inside toward the outside so that the portions (8) to be clamped are clamped.

2. A transfer robot comprising:
a foundation (17);
a link mechanism provided in the foundation (17);
a first arm (19d) attached to the foundation (17) by the link mechanism such that the first arm (19d) can rotate in a horizontal direction;
a caster (20d) that moves the first arm (19d) by using the link mechanism as axis, the caster (20d) being attached on a lower surface of the first arm (19d);
a hold portion provided on an upper surface of the first arm (19d) to hold an object to be carried; and
a clamping device (10) according to claim 1 provided at an end of the hold portion,
wherein the link mechanism comprises:
a motor;
a first speed reduction mechanism (16d) that controls a rotation by the motor; and
a second speed reduction mechanism (18d) that controls a turning movement of the first arm (19d), the second speed reduction mechanism being connected to the first speed reduction mechanism.

## Patentansprüche

1. Klemmvorrichtung (10) zum Halten und Greifen von zu verklemmenden Abschnitten von der Innenseite, aufweisend:
eine Abdeckung (4);
ein an der Abdeckung (4) befestigtes Stellglied (1), welches derart konfiguriert ist, um sich geradlinig zu bewegen;
eine an einem Ende des Stellgliedes (1) vorgesehene Verbindung (2), welche sich in einer senkrechten Richtung zu einer geradlinigen Bewegungsrichtung des Stellgliedes (1) erstreckt; und
entsprechende Klemmabschnitte (3), welche an jedem Ende der Verbindung (2) drehbar angebracht sind, wobei jeder Klemmabschnitt (3) ein entsprechendes Paar von kegelförmigen Klammer-Abschnitten (3a) besitzt, um einen zu verklemmenden Abschnitt (8) zu verklemmen, wobei einer der Klammer-Abschnitte (3a) jedes Paares in Richtung eines distalen Endes an der Abdeckung (4) derart befestigt ist, dass dieser um einen Drehpunkt (6) als eine Rotationsmitte für den entsprechenden Klemmabschnitt (3) rotieren kann, wobei die Klemmabschnitte (3) unter Verwendung der entsprechenden Drehpunkte (6) als Referernzen um die entsprechenden Drehpunkte (6) rotieren;
wobei die Klemmabschnitte (3), wenn sich das Stellglied (1) geradlinig bewegt, derart rotieren, dass sich diese von der Innenseite in Richtung der Außenseite öffnen, so dass die zu verklemmenden Abschnitte (8) verklemmt werden.

2. Transferroboter, aufweisend:
eine Basis (17);
einen Verbindungsmechanismus, welcher bei der Basis (17) vorgesehen ist;
einen ersten Arm (19d), welcher durch den Verbindungsmechanismus an der Basis (17) derart angebracht ist, dass der erste Arm (19d) in einer horizontalen Richtung rotieren kann;
eine Laufrolle (20d), welche den ersten Arm (19d) unter Verwendung des Verbindungsmechanismus als Achse bewegt, wobei die Laufrolle (20d) an einer unteren Oberfläche des ersten Arms (19d) angebracht ist;
einen Halteabschnitt, welcher auf einer oberen Oberfläche des ersten Arms (19d) vorgesehen ist, um einen zu befördernden Gegenstand zu halten;
eine Klemmvorrichtung (10) nach Anspruch 1, welche an einem Ende des Halteabschnittes vorgesehen ist,
wobei der Verbindungsmechanismus aufweist:
einen Motor;
einen ersten Geschwindigkeits-Reduktionsmechanismus (16d), welcher eine Rotation durch den Motor steuert;
einen zweiten Geschwindigkeits-Reduktionsmechanismus (18d), welcher eine Drehbewegung des ersten Arms (19d) steuert, wobei der zweite Geschwindigkeits-Reduktionsmechanismus mit dem ersten Geschwindigkeits-Reduktionsmechanismus verbunden ist.

## Revendications

1. Dispositif de serrage (10) pour maintenir et saisir des parties à serrer depuis l'intérieur, comprenant :
un couvercle (4) ;
un actionneur (1) fixé sur le couvercle (4) qui est configuré pour se déplacer tout droit ;
une liaison (2) prévue au niveau d'une pointe de l'actionneur (1) qui s'étend dans une direction perpendiculaire à la direction de déplacement en ligne droite de l'actionneur (1) ; et
des parties de serrage (3) respectives fixées de manière rotative à chaque extrémité de la liaison (2), chaque partie de serrage (3) comprenant une paire respective de parties de clou de serrage progressivement rétrécies (3a) pour serrer une partie (8) à serrer, l'une des parties de clou de serrage progressivement rétrécies (3a) de chaque paire qui est fixée, vers une extrémité distale, sur le couvercle (4) de sorte qu'elle peut tourner sur un pivot (6) en tant que centre de rotation pour la partie de serrage (3) respective, les parties de serrage (3) tournant sur les pivots (6) respectifs en utilisant les pivots (6) respectifs en tant que références ;
dans lequel, lorsque l'actionneur (1) se déplace en ligne droite, les parties de serrage (3) tournent de sorte qu'elles peuvent s'ouvrir depuis l'intérieur vers l'extérieur afin que les parties (8) à serrer soient serrées.

2. Robot de transfert comprenant :
une base (17) ;
un mécanisme de liaison prévu dans la base (17) ;
un premier bras (19d) fixé à la base (17) par le mécanisme de liaison de sorte que le premier bras (19d) peut tourner dans une direction horizontale ;
un galet pivotante (20d) qui déplace le premier bras (19d) à l'aide du mécanisme de liaison en tant qu'axe, le galet pivotant (20d) étant fixé sur une surface inférieure du premier bras (19d) ;
une partie de maintien prévue sur une surface supérieure du premier bras (19d) pour maintenir un objet à porter ; et
un dispositif de serrage (10) selon la revendication 1, prévu à une extrémité de la partie de maintien,
dans lequel le mécanisme de liaison comprend :
un moteur ;
un premier mécanisme de réduction de vitesse (16d) qui commande une rotation par le moteur ; et
un second mécanisme de réduction de vitesse (18d) qui commande un mouvement de pivotement du premier bras (19d), le second mécanisme de réduction de vitesse étant raccordé au premier mécanisme de réduction de vitesse.
